# EUROPÄISCHE PATENTSCHRIFT

(11) **EP 1 498 747 B1**
(45) Veröffentlichungstag und Bekanntmachung des Hinweises auf die Patenterteilung: **13.02.2013**
(21) Anmeldenummer: 04014436.2
(22) Anmeldetag: 19.06.2004
(51) Int. Cl.: G01V 8/12

(54) **Optoelektronische Vorrichtung**
Optoelectronic device
Appareil optoélectronique

(30) Priorität: 16.07.2003 DE 20310903 U
(43) Veröffentlichungstag der Anmeldung: 19.01.2005
(73) Patentinhaber: Leuze electronic GmbH + Co KG, 73277 Owen/Teck (DE)
(72) Erfinder: Hermle, Axel, 73277 Owen / Teck (DE); Schönhardt, Manfred, 73252 Lenningen (DE); Argast, Martin, 72584 Hülben (DE); Haag, Roland, 73278 Schlierbach (DE)
(74) Vertreter: Ruckh, Rainer Gerhard

(56) Entgegenhaltungen:
- EP-A- 0 892 280
- EP-A- 1 087 215
- EP-A- 1 089 030
- EP-A- 1 116 963
- DE-A- 4 305 559
- DE-A- 4 422 497
- US-A- 5 266 810
- US-A- 5 808 296

## Beschreibung

Die Erfindung betrifft eine optoelektronische Vorrichtung gemäß dem Oberbegriff des Anspruchs 1.

Derartige optoelektronische Vorrichtungen werden insbesondere zur Detektion von auf Trägermedien transportierten beziehungsweise bewegten Objekten eingesetzt. Insbesondere können die Objekte von Etiketten gebildet sein, die auf Trägerbändern aufgebracht sind, welche das Trägermedium bilden.

Die Etiketten und das Trägerband sind typischerweise zumindest teiltransparent ausgebildet. Bekannte optoelektronische Vorrichtungen zur Erfassung derartiger Objekte arbeiten daher im Durchlichtprinzip und sind als Einweglichtschranken, insbesondere Gabellichtschranken ausgebildet. Die von dem Sender der optoelektronischen Vorrichtung emittierten Sendelichtstrahlen durchsetzen die Etiketten und/oder das Trägerband. Der diese Objekte durchsetzende Teil der Sendelichtstrahlen wird als Empfangslicht auf den Empfänger geführt.

Die Etiketten sind in definierten Abständen auf dem Trägerband angeordnet. Je nachdem, ob die Sendelichtstrahlen auf eine Stelle des Trägerbandes auftreffen, auf welchem ein Etikett angeordnet ist oder nicht, werden die Sendelichtstrahlen beim Durchgang durch diese Objektstruktur in unterschiedlicher Weise abgeschwächt.

Da sowohl die Etiketten als auch das Trägerband nur geringe Dicken aufweisen, und zudem aus transparenten Materialien bestehen, sind die durch die Etiketten bewirkten Änderungen der Empfangssignale des Empfängers gering.

Um dennoch eine Etikettenerkennung zu gewährleisten, muss die Ansprechempfindlichkeit der optoelektronischen Vorrichtung möglichst genau eingestellt werden.

Typischerweise werden zur Detektion der Etiketten auf dem Trägerband die Empfangssignale des Empfängers mit einem Schwellwert zur Generierung eines Objektfeststellungssignals bewertet. Die Einstellung der Ansprechempfindlichkeit erfolgt dann dadurch, dass entweder die Pegel der Empfangssignale, beispielsweise durch Variation der Verstärkung der Empfangssignale, oder der Schwellwert eingestellt werden.

Typischerweise erfolgt die Einstellung der Ansprechempfindlichkeit auf die Amplitude des Empfangssignals, welches bei auf das Trägerband gerichteten Sendelichtstrahlen registriert wird.

Das Trägerband muss hierzu manuell an der optoelektronischen Vorrichtung so ausgerichtet und fixiert werden, dass die Sendelichtstrahlen auf eine Lücke zwischen zwei Etiketten treffen, so dass dann der Abgleich der Empfangspegel auf das detektierte Trägerband erfolgen kann.

Der Erfindung liegt die Aufgabe zugrunde die Nachweisempfindlichkeit und Verfügbarkeit einer optoelektronischen Vorrichtung der eingangs genannten Art zu verbessern.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von auf einem mit einer Fördergeschwindigkeit bewegten Trägermedium angeordneten Objekten. Diese optoelektronische Vorrichtung weist einen Sendelichtstrahlen emittierenden Sender, einen Empfangslichtstrahlen empfangenden Empfänger und eine Auswerteeinheit zur Generierung eines Objektfeststellungssignals in Abhängigkeit der Empfangssignale des Empfängers auf. Während der Bewegung des Trägermediums ist ein Einlernvorgang durchfiihrbar, innerhalb dessen die Empfangssignale und/oder ein Schwellwert zur Bewertung der Empfangssignale einstellbar ist beziehungsweise sind.

Ein wesentlicher Vorteil der erfindungsgemäßen optoelektronischen Vorrichtung besteht darin, dass die Einstellung deren Ansprechempfindlichkeit während der Bewegung des Trägermediums mit den Objekten und damit unter realen Betriebsbedingungen der optoelektronischen Vorrichtung erfolgt.

Dadurch wird insbesondere die Nachweisempfindlichkeit der optoelektronischen Vorrichtung erhöht. Dies beruht darauf, dass die während des Einlemvorgangs ermittelten Abgleichwerte im Gegensatz zu statisch ermittelten Abgleichwerten bereits an die realen Randbedingungen des Betriebs der optoelektronischen Vorrichtung angepasst ist.

Beispielsweise werden bei der Detektion von Etiketten auf Trägerbändern die Empfangssignale durch den Transport des Trägerbandes verursachte Einflussgrößen wie zum Beispiel einem Flattern des Trägerbandes oder Kanteneffekte bei der Detektion von Etiketten beeinflusst. Im Gegensatz zu einem statischen Abgleich der optoelektronischen Vorrichtung sind diese Einflussgrößen durch den erfindungsgemäßen Einlernvorgang berücksichtigt.

In einer vorteilhaften Ausführungsform der Erfindung werden während des Einlernvorgangs fortlaufend die Spitzenwerte des Empfangssignals erfasst. Dabei werden entweder die Minimalwerte oder Maximalwerte des Empfangssignals erfasst, welche entweder einer Objektdetektion oder der Detektion des Trägermediums ohne Objekt entsprechen. Während des Einlernvorgangs werden die registrierten Spitzenwerte schrittweise an einen Schwellwert angepasst, welcher vorzugsweise auch zur Bewertung des Empfangssignals und damit zur Generierung des Objektfeststellungssignals verwendet wird.

Am Ende des Einlemvorgangs wird entweder zu dem Schwellwert oder zu den aktuellen Empfangssignalen ein eine Funktionsreserve bildender Offset-Wert addiert. Diese vorzugsweise als Parameter einstellbare Funktionsreserve definiert die Ansprechempfindlichkeit der optoelektronischen Vorrichtung. Da die Empfangssignale auf den Schwellwert unter Realbedingungen abgeglichen werden und mit der Funktionsreserve ein definierter, applikationsspezifisch optimierter Differenzwert der Spitzenwerte zu dem Schwellwert erhalten wird, wird mit der erfindungsgemäßen optoelektronischen Vorrichtung eine optimierte Nachweisempfindlichkeit erhalten.

Die erfindungsgemäße optoelektronische Vorrichtung kann generell zur Detektion von Objekten auf Trägermedien eingesetzt werden, die relativ zu der optoelektronischen Vorrichtung bewegt werden. Beispielsweise können die Objekte auf Förderbändern transportiert werden, welche die Trägermedien bilden.

Die optoelektronische Vorrichtung kann dabei generell als Lichtschranke, insbesondere Einweglichtschranke oder Reflexionslichtschranke ausgebildet sein. Ebenso kann die optoelektronische Vorrichtung nach dem Lichttasterprinzip arbeiten, wobei zur Detektion entweder die auf dem Empfänger registrierten Lichtintensitäten ausgewertet werden können. Alternativ oder zusätzlich können mit der optoelektronischen Vorrichtung die Distanzen von Objekten bestimmt werden.

In einer besonders vorteilhaften Ausbildung wird die optoelektronische Vorrichtung zur Detektion von auf Trägerbändem aufgebrachten Etiketten eingesetzt.

Die Erfindung wird im Nachstehenden anhand der Zeichnungen erläutert. Es zeigen:
- Figur 1:: Schematische Darstellung einer als Gabellichtschranke ausgebildeten optoelektronischen Vorrichtung zur Detektion von auf Trägerbändern aufgebrachten Etiketten.
- Figur 2:: Längsschnitt durch die optoelektronische Vorrichtung gemäß Figur 1.
- Figur 3:: Zeitabhängigkeit von Signalverläufen der optoelektronischen Vorrichtung gemäß den Figuren 1 und 2 während eines Einlemvorganges.
- Figur 4:: Zeitabhängigkeit von Signalverläufen der optoelektronischen Vorrichtung gemäß den Figuren 1 und 2 nach Beenden des Einlemvorganges.
- Figur 5:: Flussdiagramm zur Durchführung des Einlernvorganges gemäß Figur 3.
- Figur 6:: Schematische Darstellung einer als Reflexionslichtschranke ausgebildeten optoelektronischen Vorrichtung zur Detektion von auf Trägermaterialien aufgebrachten Etiketten.
- Figur 7:: Schematische Darstellung einer als Lichttaster ausgebildeten optoelektronischen Vorrichtung zur Detektion von diffus reflektierenden Objekten auf einem Förderband.
- Figur 8:: Schematische Darstellung einer als Lichttaster ausgebildeten optoelektronischen Vorrichtung zur Detektion von spiegelnd reflektierenden Objekten auf einem Förderband.

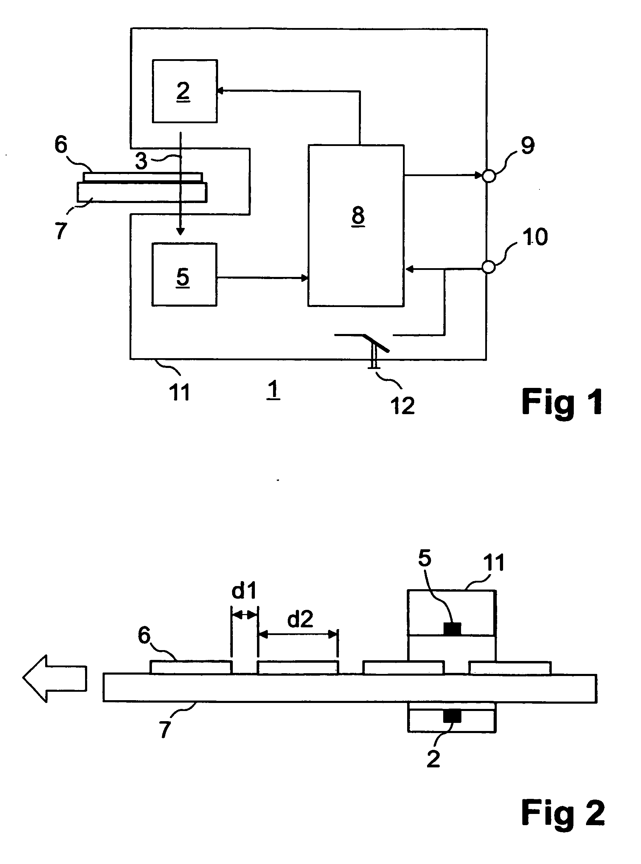

Die Figuren 1 und 2 zeigen ein Ausführungsbeispiel einer als Gabellichtschranke ausgebildeten optoelektronischen Vorrichtung 1. Die optoelektronische Vorrichtung 1 weist einen Sender 2 auf, welcher Sendelichtstrahlen 3 emittiert. Zudem weist die optoelektronische Vorrichtung 1 einen Empfangslichtstrahlen 4 empfangenden Empfänger 5 auf. Der Sender 2 ist von einer Leuchtdiode gebildet. Der Empfänger 5 besteht aus einer Photodiode oder dergleichen.

Mittels der optoelektronischen Vorrichtung 1 werden im Vorliegenden Etiketten 6 erfasst, die auf ein Trägerband 7 aufgeklebt sind. Das Trägerband 7 wird in einer in Figur 2 mit einem Pfeil gekennzeichneten Förderrichtung transportiert. Die Etiketten 6 sind in Förderrichtung in konstanten Abständen hintereinander liegend angeordnet. Wie in Figur 2 dargestellt weisen die Etiketten 6 jeweils dieselbe mit d2 bezeichnete Länge auf. Die Lücken zwischen zwei hintereinander angeordneten Etiketten 6 weisen ebenfalls jeweils eine konstante Länge auf, die in Figur 2 mit d1 bezeichnet ist.

Die Etiketten 6 und das Trägerband 7 sind zumindest teilweise transparent. Demzufolge durchsetzt ein Teil der Sendelichtstrahlen 3 diese Objektstruktur und trifft als Empfangslichtstrahlen 4 auf den Empfänger 5.

Der Sender 2 und der Empfänger 5 sind an eine Auswerteeinheit 8 angeschlossen, die von einem Microcontroller oder dergleichen gebildet ist.

Mittels der Auswerteeinheit 8 erfolgt die Ansteuerung des Senders 2. Zudem werden in der Auswerteeinheit 8 die am Ausgang des Empfängers 5 anstehenden Empfangssignale zur Generierung eines Objektfeststellungssignals ausgewertet. Das Objektfeststellungssignal ist im vorliegenden Fall von einem binären Schaltsignal gebildet, dessen beide Schaltzustände angeben, ob sich im Strahlengang 9 der Sendelichtstrahlen 3 ein Etiketten 6 befindet oder nicht. Das Schaltsignal wird über einen an die Auswerteeinheit 8 angeschlossenen Schaltausgang ausgegeben.

Zudem ist an die Auswerteeinheit 8 ein Teacheingang 10 angeschlossen, über welchen ein Einlemvorgang aktiviert oder deaktiviert werden kann. Der Teacheingang 10 kann an eine Steuereinheit oder dergleichen angeschlossen sein.

Zudem ist an der Außenwand eines die Komponenten der optoelektronischen Vorrichtung 1 aufnehmenden Gehäuses 11 eine Teachtaste 12 vorgesehen, mittels derer manuell der Einlemvorgang aktiviert oder deaktiviert werden kann.

Das Gehäuse 11 ist gabelförmig ausgebildet. In einem Spalt zwischen den beiden Gabelarmen des Gehäuses 11 ist das Trägerband 7 mit den Etiketten 6 geführt. In jeweils einem der Gabelarme ist der Sender 2 beziehungsweise der Empfänger 5 angeordnet. Der Sender 2 und der Empfänger 5 sind gegenüberliegend angeordnet, wobei die Sendelichtstrahlen 3 und Empfangslichtstrahlen 4 jeweils durch ein nicht dargestelltes Fenster in dem jeweiligen Gabelarm geführt sind.

Zur Erfassung der Etiketten 6 auf dem Trägerband 7 werden die Empfangssignale mit einem Schwellwert s1 bewertet. Liegt das Empfangssignal unterhalb des Schwellwerts s1, entspricht dies einer Etikettendetektion. Sind die Sendelichtstrahlen 3 auf eine Lücke zwischen zwei Etiketten 6 gerichtet, liegt das Empfangssignal oberhalb des Schwellwerts s1.

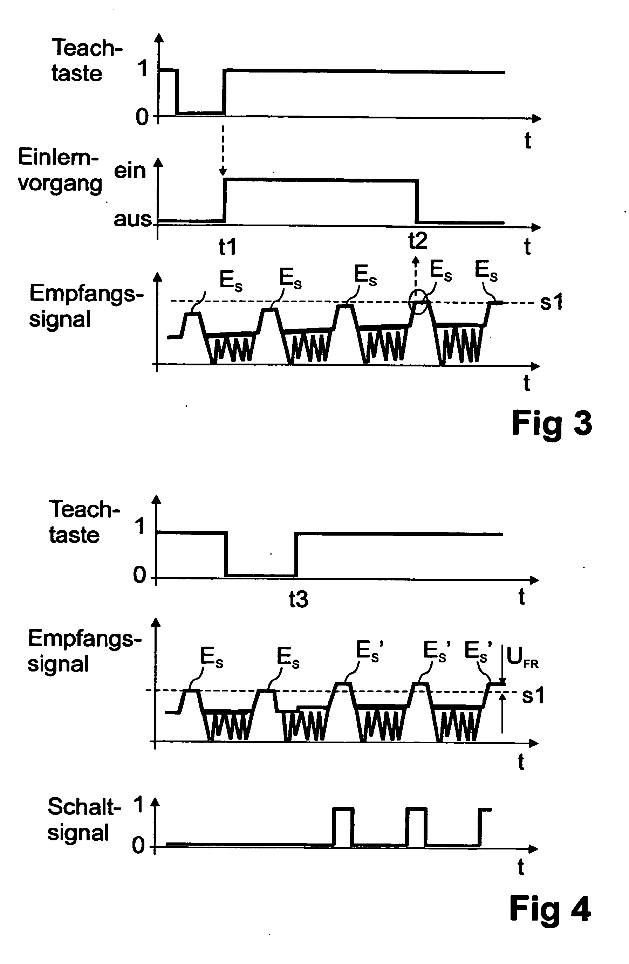

Die Figuren 3 bis 5 veranschaulichen den Ablauf eines Einlernvorganges sowie den an den Einlernvorgang anschließenden Arbeitsbetrieb der optoelektronischen Vorrichtung 1.

Das obere Diagramm zeigt den Signalverlauf des mit der Teachtaste 12 generierten Teachsignals. Durch Betätigen der Teachtaste 12 wird ein Teachbetrieb einleitet. Damit wechselt das Teachsignal vom Signalzustand 1 in den Signalzustand O. Nach Beenden der Betätigung der Teachtaste 12 wechselt das Teachsignal wieder in den Signalzustand 1. Mit dem ersten Betätigen der Teachtaste 12 gemäß Figur 3 wird der Einlernvorgang gestartet. Der Startpunkt des Einlernvorganges ist die steigende Flanke des Teachsignals, im vorliegenden Fall der Zeitpunkt t₁.

Während des gesamten Einlernvorganges werden wie bei dem Arbeitsbetrieb die Etiketten 6 auf dem Trägerband 7 gefördert und von der optoelektronischen Vorrichtung 1 detektiert.

Während des Einlemvorganges werden die Spitzenwerte des Empfangssignals, im Vorliegenden die Maxima der Empfangssignale, welche den Detektionen der Lücken zwischen den Etiketten 6 entsprechen, fortlaufend erfasst.

Anhand der so ermittelten Spitzenwerte erfolgt eine schrittweise Nachführung der Verstärkung der Empfangssignale bis die Spitzenwerte dem Schwellwert s1 entsprechen, der zur Generierung des Objektfeststellungssignals dient.

Das untere Diagramm in Figur 3 zeigt den zeitlichen Verlauf des Empfangssignals während des Einlemvorganges. Zwischen den mit Eₛ bezeichneten Spitzenwerte der Empfangssignale liegen jeweils Bereiche geringer Signalamplituden, die jeweils einer Etikettendetektion entsprechen. Durch Bedruckungen der Etiketten 6 kann das Empfangssignal in diesen Bereichen stark schwanken.

Wie aus dem mittleren Diagramm in Figur 3 ersichtlich, ist zum Zeitpunkt t₂ die Verstärkungsnachführung innerhalb des Einlemvorganges abgeschlossen, da der Spitzenwert Eₛ zum Zeitpunkt t₂ dem Schwellwert s1 entspricht.

Zum Beenden des Einlemvorganges wird die Teachtaste 12 ein zweites Mal betätigt, wodurch ein weiterer Teachbefehl generiert wird. Dies ist in Figur 4 (oberes Diagramm) dargestellt. Analog zum Auslösen des Einlemvorganges wird das Beenden des Einlemvorganges mit der steigenden Flanke des Teachsignals zum Zeitpunkt t₃ bewirkt.

Am Ende des Einlernvorganges wird eine Funktionsreserve vorgegeben, in dem ein Offset-Wert U_{FR} zu dem während des Einlemvorganges ermittelten Empfangssignalpegel addiert wird. Dadurch liegen die so geänderten Spitzenwerte Eₛ' des Empfangssignals um den Offset-Wert U_{FR} oberhalb des Schwellwerts s1. Der Offset-Wert U_{FR} ist in der Auswerteeinheit 8 als einstellbarer Parameterwert abgespeichert und so gewählt, dass die Spitzenwerte Eₛ' oberhalb des Schwellwerts s1, jedoch die Pegel der Empfangssignale bei der Detektion der Etiketten 6 unterhalb der Etiketten 6 liegen. Alternativ kann die Funktionsreserve durch Veränderung des Schwellwerts s1 eingestellt werden.

Durch die Einstellung der Funktionsreserve wird eine sichere Etikettendetektion während des auf den Einlernvorgang folgenden Arbeitsbetriebs gewährleistet.

Wie aus dem unteren Diagramm in Figur 4 ersichtlich wechselt das binäre Schaltsignal der optoelektronischen Vorrichtung 1 während des Arbeitsbetriebs vom Schaltzustand 0 in den Schaltzustand 1, sobald der Spitzenwert Es' den Schwellwert sl überschreitet, was der Detektion einer Lücke zwischen zwei Etiketten 6 entspricht. Demgegenüber bleibt das Schaltsignal im Schaltzustand 0 bei der Detektion von Etiketten 6. Wie weiterhin aus dem unteren Diagramm in Figur 4 ersichtlich bleibt das Schaltsignal während des Einlemvorgangs, das heiß zu den Zeiten t < t₃, dauernd deaktiviert, das heißt im Schaltzustand 0.

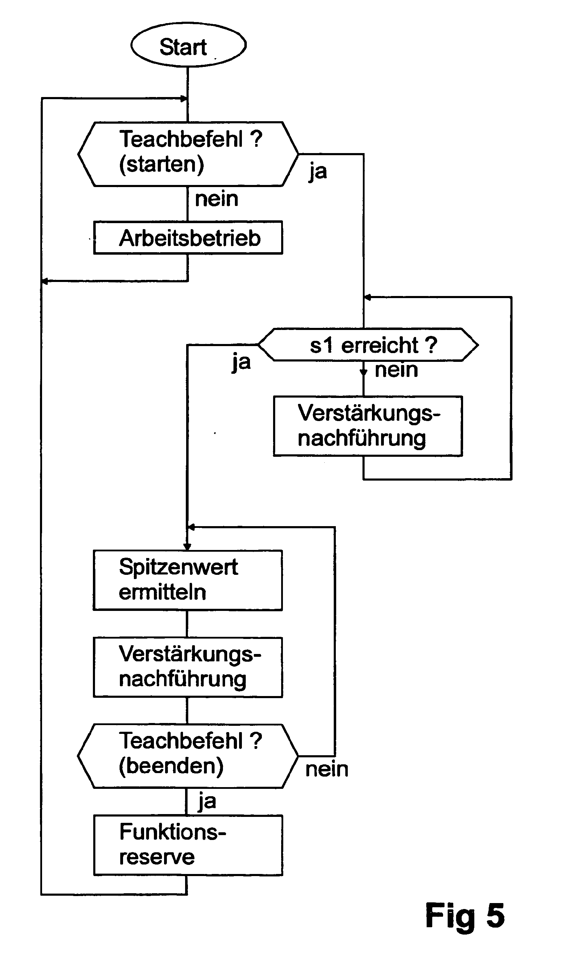

Figur 5 zeigt in einem Flussdiagramm den Ablauf des Einlernvorganges sowie den Wechsel zwischen Einlemvorgang und Arbeitsbetrieb der optoelektronischen Vorrichtung 1.

Wie aus Figur 5 ersichtlich wird mit dem ersten Teachbefehl (Starten) der Arbeitsbetrieb unterbrochen und der Einlernvorgang gestartet. In dem Einlemvorgang erfolgt eine schrittweise Verstärkungsnachführung des Empfangssignals, bis dieses den Schwellwert s1 erreicht. Hierzu erfolgt nach jeder Verstärkungsnachführung eine Abfrage in der Auswerteeinheit 8, ob der jeweils ermittelte Spitzenwert des Empfangssignals den Schwellwert s1 erreicht hat. Durch den zweiten Teachbefehl (Beenden) wird dann der Einlernvorgang beendet, die Funktionsreserve eingestellt und der Arbeitsbetrieb wieder aufgenommen, falls kein neuer Einlemvorgang gestartet wird.

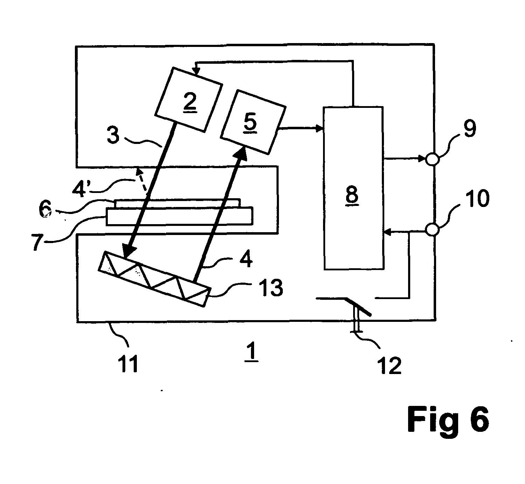

Figur 6 zeigt ein zweites Ausführungsbeispiel der optoelektronischen Vorrichtung 1. Analog zu dem Ausführungsbeispiel gemäß dem Ausführungsbeispiel gemäß Figur 1 arbeitet die optoelektronische Vorrichtung 1 nach dem Lichtschrankenprinzip, wobei die optoelektronische Vorrichtung 1 analog zu dem Ausführungsbeispiel gemäß den Figuren 1 und 2 als Gabellichtschranke ausgebildet ist.

Im Unterschied zu der Ausführungsform gemäß den Figuren 1 und 2 sind bei der Gabellichtschranke gemäß Figur 6 der Sender 2 und der Empfänger 5 nebeneinander liegend in einem Gabelarm integriert und befindet sich somit auf derselben Seite des mit der optoelektronischen Vorrichtung 1 überwachten Bereichs zwischen den Gabelarmen. In dem zweiten Gabelarm ist auf der gegenüberliegenden Seite des überwachten Bereichs ein Reflektor 13 angeordnet. Die vom Sender 2 emittierten Sendelichtstrahlen 3 durchsetzen das Trägerband 7 mit den Etiketten 6 und werden dann am Reflektor 13 reflektiert. Die so am Reflektor 13 zurückreflektierten Empfangslichtstrahlen 4 durchsetzen das Trägerband 7 mit den Etiketten 6 nochmals bevor diese auf den Empfänger 5 treffen. Zur Vermeidung direkter Rückreflexionen der auf das Trägerband 7 auf treffenden Sendelichtstrahlen 3 in den Empfänger 5 sind die Strahlachsen der Sendelichtstrahlen 3 und der Empfangslichtstrahlen 4 in einem vorgegebenen Neigungswinkel geneigt zur Oberflächennormalen des Trägerbandes 7.

Die übrigen Komponenten der optoelektronischen Vorrichtung 1 entsprechen der Ausführungsform gemäß den Figuren 1 und 2. Die Signalauswertung und die Durchführung des Einlemvorgangs erfolgt wieder entsprechend den Figuren 3 bis 5.

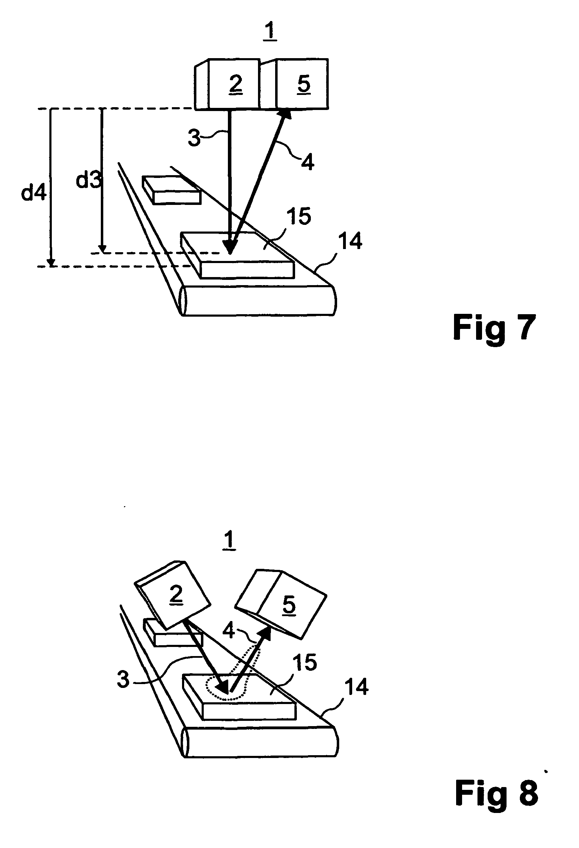

Figur 7 zeigt eine als Lichttaster ausgebildete optoelektronische Vorrichtung 1. In diesem Fall sind der Sender 2 und der Empfänger 5 der optoelektronischen Vorrichtung 1 in einem nicht gesondert dargestellten Gehäuse nebeneinander liegend angeordnet. Die übrigen nicht dargestellten elektronischen Komponenten der optoelektronischen Vorrichtung 1 entsprechen der Ausführungsform gemäß den Figuren 1 und 2.

Im vorliegenden Fall ist die optoelektronische Vorrichtung 1 oberhalb eines Förderbandes 14 aufgebracht, auf welchem zu detektierende Objekte 15 gefördert werden. Die Anordnungen des Senders 2 und des Empfängers 5 sind bei der Ausführungsform gemäß Figur 7 so gewählt, dass Objekte 15 mit diffus reflektierenden Oberflächen erfassbar sind.

Das Förderband 14 liegt in einem Abstand d4 zu der optoelektronischen Vorrichtung 1. Je nach Größe der Objekte 15 liegen deren Oberflächen in unterschiedlichen Abständen d3 zur optoelektronischen Vorrichtung 1, welche in jedem Fall kleiner als der Abstand d4 sind. Zur Objekterkennung kann einerseits die Amplitude des Empfangssignals des Empfängers 5 mit einem Schwellwert s1 bewertet werden. In diesem Fall erfolgt der Einlemvorgang entsprechend dem Verfahren gemäß den Figuren 3 bis 5, wobei als Spitzenwert das Empfangssignal in diesem Fall der zum Förderband 14 stammende Minimalwert eingelernt wird.

In einer bevorzugten Ausführungsform ist die optoelektronische Vorrichtung 1 gemäß Figur 7 als Distanzsensor ausgebildet. In diesem Fall werden die im Empfänger 5 registrierten und in der Auswerteeinheit 8 berechneten Distanzwerte mit einem Schwellwert s1 bewertet. Der Einlernvorgang gemäß den Figuren 3 bis 5 ist dann derart abgewandelt, dass der Schwellwert s1 auf den Distanzwert d4 nachgeführt wird. Am Ende des Einlemvorganges wird der Schwellwert s1 um einen die Funktionsreserve bildenden Offset-Wert U_{FR} derart geändert, dass der Schwellwert s1 dicht unterhalb des Spitzenwerts d4 liegt, so dass die nachfolgenden Objekte 15, deren Distanzen d3 unterhalb des Schwellwerts s1 liegen, sicher erfasst werden können.

Figur 8 zeigt eine Abwandlung der optoelektronischen Vorrichtung 1 gemäß Figur 7. Der Sender 2 und der Empfänger 5 sind derart angeordnet, dass die Strahlachsen der Sendelichtstrahlen 3 und der Empfangslichtstrahlen 4 geneigt zueinander verlaufen und sich in einer im Bereich der Oberfläche des Förderbandes 14 verlaufenden Detektionsebene schneiden. Diese Anordnung eignet sich zur Detektion von Objekten 15 mit spiegelnd reflektierenden Oberflächen.

### Bezugszeichenliste

- (1): Optoelektronische Vorrichtung
- (2): Sender
- (3): Sendelichtstrahlen
- (4): Empfangslichtstrahlen
- (5): Empfänger
- (6): Etiketten
- (7): Trägerband
- (8): Auswerteeinheit
- (9): Strahlengang
- (10): Teacheingang
- (11): Gehäuse
- (12): Teachtaste
- (13): Reflektor
- (14): Förderband
- (15): Objekte

- d1: Distanz
- d2: Distanz
- d3: Distanz
- d4: Distanz
- Eₛ: Spitzenwert
- Es': Spitzenwert
- s1: Schwellwert
- t₁: Zeitpunkt
- t₂: Zeitpunkt
- t₃: Zeitpunkt
- U_{FR}: Offset-Wert

## Patentansprüche

1. Optoelektronische Vorrichtung zur Erfassung von auf einem mit einer Fördergeschwindigkeit bewegten Trägermedium angeordneten Objekten, mit einem Sendelichtstrahlen emittierenden Sender, mit einem Empfangslichtstrahlen empfangenden Empfänger und mit einer Auswerteeinheit, in welcher zur Generierung eines Objektfeststellungssignals die Empfangssignale des Empfängers mit einem Schwellwert bewertet werden, **dadurch gekennzeichnet, dass** während der Bewegung des Trägermediums ein Einlernvorgang durchführbar ist, wobei während des Einlernvorgangs fortlaufend die Spitzenwerte der Empfangssignale erfasst werden, welche von den Minimalwerten oder Maximalwerten des Empfangssignals gebildet sind, welche entweder einer Objektdetektion oder der Detektion des Trägermediums entsprechen, dass anhand der registrierten Spitzenwerte eine schrittweise Nachführung der Verstärkung der Empfangssignale erfolgt, bis die Spitzenwerte dem Schwellwert entsprechen, und dass am Ende des Einlernvorgangs ein eine Funktionsreserve bildender Offset-Wert zu dem Schwellwert oder zu den aktuellen Empfangssignalen addiert wird.

2. Optoelektronische Vorrichtung nach Anspruch 1, **dadurch gekennzeichnet, dass** das Objektfeststellungssignal ein binäres Schaltsignal ist.

3. Optoelektronische Vorrichtung nach einem der Ansprüche 1 oder 2, **dadurch gekennzeichnet, dass** diese Schaltmittel zur Auslösung und zum Beenden des Einlernvorganges aufweist.

4. Optoelektronische Vorrichtung nach Anspruch 3, **dadurch gekennzeichnet, dass** die Schaltmittel von einer Teachtaste (12) gebildet sind.

5. Optoelektronische Vorrichtung nach Anspruch 3, **dadurch gekennzeichnet, dass** die Schaltmittel von einer Leitung gebildet sind, über welche ein Steuersignal in die Auswerteeinheit (8) eingebbar ist

6. Optoelektronische Vorrichtung nach Anspruch 5, **dadurch gekennzeichnet, dass** die Funktionsreserve als Parameterwert in die Auswerteeinheit (8) eingebbar ist.

7. Optoelektronische Vorrichtung nach einem der Ansprüche 1 - 6, **dadurch gekennzeichnet, dass** während deren Arbeitsbetrieb der Pegel des Empfangssignals auf einen während des Einlernvorgangs ermittelten Spitzenwert nachgeführt wird.

8. Optoelektronische Vorrichtung nach einem der Ansprüche 1 - 7, **dadurch gekennzeichnet, dass** diese als Einweglichtschranke ausgebildet ist, wobei die Objekte (15) zwischen dem Sender (2) und dem Empfänger (5) der Einweglichtschranke geführt sind.

9. Optoelektronische Vorrichtung nach Anspruch 8, **dadurch gekennzeichnet, dass** diese als Gabellichtschranke ausgebildet ist.

10. Optoelektronische Vorrichtung nach einem der Ansprüche 1 - 9, **dadurch gekennzeichnet, dass** diese als Reflexionslichtschranke ausgebildet ist, wobei die Objekte (15) durch den von der Reflexionslichtschranke erfassten Überwachungsbereich geführt sind, an dessen einem Rand der Sender (2) und der Empfänger (5) angeordnet sind, und an dessen zweiten Rand ein Reflektor (13) angeordnet ist.

11. Optoelektronische Vorrichtung nach Anspruch 10, **dadurch gekennzeichnet, dass** die Strahlachsen der Sendelichtstrahlen (3) und der Empfangslichtstrahlen (4) geneigt zu den Oberflächennormalen der Objekte (15) verlaufen.

12. Optoelektronische Vorrichtung nach einem der Ansprüche 1- 9, **dadurch gekennzeichnet, dass** diese als Lichttaster ausgebildet ist, wobei die von dem Sender (2) emittierten Sendelichtstrahlen (3) an einem Objekt (15) zumindest teilweise reflektiert und als Empfangslichtstrahlen (4) zum Empfänger (5) geführt werden.

13. Optoelektronische Vorrichtung nach einem der Ansprüche 1 - 12, **dadurch gekennzeichnet, dass** mit dieser als Objekte (15) Etiketten (6) erfassbar sind, welche auf einem das Trägermedium bildenden Trägerband (7) angebracht sind.

14. Optoelektronische Vorrichtung nach einem der Ansprüche 1 - 13, **dadurch gekennzeichnet, dass** mit diesem Objekte (15) erfassbar sind, welche auf einem das Trägermedium bildenden Förderband (14) gefördert werden.

## Claims

1. Optoelectronic device for detecting objects arranged on a support medium moved at a conveying speed, comprising a transmitter emitting transmitted light beams, a receiver receiving received light beams and an evaluating device in which the received signals of the receiver are evaluated by a threshold value for generation of an object detection signal, **characterised in that** during the movement of the support medium a learning process is performable, wherein during the learning process the peak values of the received signals are continuously detected, the peak values being formed by the minimum values or maximum values - which correspond with either object detection or detection of the support medium - of the received signal, that on the basis of the registered peak values a stepped adjustment of the amplification of the received signals is carried out until the peak values correspond with the threshold value and that at the end of the learning process an offset value forming a function margin is added to the threshold value or to the current received signals.

2. Optoelectronic device according to claim 1, **characterised in that** the object detection signal is a binary switching signal.

3. Optoelectronic device according to one of claims 1 and 2, **characterised in that** this comprises switching means for triggering and for concluding the learning process.

4. Optoelectronic device according to claim 3, **characterised in that** the switching means are formed by a teach button (12).

5. Optoelectronic device according to claim 3, **characterised in that** the switching means are formed by a line by way of which a control signal can be input into the evaluating unit (8).

6. Optoelectronic device according to claim 5, **characterised in that** the function margin can be input into the evaluating unit (8) as a parameter value.

7. Optoelectronic device according to any one of claims 1 to 6, **characterised in that** during the working operating thereof the level of the received signal is adjusted to a peak value ascertained during the learning process.

8. Optoelectronic device according to any one of claims 1 to 7, **characterised in that** this is formed as a one-way light barrier, wherein the objects (15) are guided between the transmitter (2) and the receiver (5) of the one-way light barrier.

9. Optoelectronic device according to claim 8, **characterised in that** this is constructed as a forked light barrier.

10. Optoelectronic device according to any one of claims 1 to 9, **characterised in that** this is constructed as a reflection light barrier, wherein the objects (15) are guided through the monitoring region detected by the reflection light barrier, the transmitter (2) and receiver (5) being arranged at one edge of the monitoring region and a reflector (13) being arranged at the second edge of the monitoring region.

11. Optoelectronic device according to claim 10, **characterised in that** the beam axes of the transmitted light beams (3) and the received light beams (4) extend at an inclination to the surface normals of the objects (15).

12. Optoelectronic device according to any one of claims 1 to 9, **characterised in that** this is constructed as an optical scanner, wherein the transmitted light beams (3) emitted by the transmitter (2) are reflected at least in part at an object (15) and are guided as received light beams (4) to the receiver (5).

13. Optoelectronic device according to any one of claims 1 to 12, **characterised in that** labels (6) mounted on a support belt (7) forming the support medium are detectable as objects by the device.

14. Optoelectronic device according to any one of claims 1 to 13, **characterised in that** objects (15) which are conveyed on a conveyor belt (14) forming the support medium are detectable by the device.

## Revendications

1. Dispositif optoélectronique pour la détection d'objets disposés sur un moyen de support déplacé à une vitesse de transport, avec un émetteur émettant des rayons lumineux d'émission, un récepteur recevant des rayons lumineux de réception et une unité d'évaluation dans laquelle les signaux de réception du récepteur sont comparés à une valeur seuil pour générer un signal de détection d'objet, **caractérisé en ce qu'**un processus d'apprentissage peut être exécuté pendant le déplacement du moyen de support, pendant lequel processus d'apprentissage les valeurs de crête des signaux de réception, qui sont formées des valeurs minimales ou des valeurs maximales du signal de réception, lesquelles correspondent soit à une détection d'objet, soit à la détection du moyen de support, sont détectées en continu, qu'un ajustement progressif de l'amplification des signaux de réception est effectué à l'aide des valeurs de crête enregistrées jusqu'à ce que les valeurs de crête correspondent à la valeur seuil, et qu'à la fin du processus d'apprentissage une valeur de décalage formant une réserve de fonctionnement est additionnée à la valeur seuil ou aux signaux de réception actuels.

2. Dispositif optoélectronique selon la revendication 1, **caractérisé en ce que** le signal de détection d'objet est un signal de commutation binaire.

3. Dispositif optoélectronique selon une des revendications 1 ou 2, **caractérisé en ce que** celui-ci présente des moyens de commutation pour déclencher et terminer le processus d'apprentissage.

4. Dispositif optoélectronique selon la revendication 3, **caractérisé en ce que** les moyens de commutation sont formés par une touche d'apprentissage (12).

5. Dispositif optoélectronique selon la revendication 3, **caractérisé en ce que** les moyens de commutation sont formés par une ligne via laquelle un signal de commande peut être entré dans l'unité d'évaluation (8).

6. Dispositif optoélectronique selon la revendication 5, **caractérisé en ce que** la réserve de fonctionnement peut être entrée dans l'unité d'évaluation (8) en tant que valeur de paramètre.

7. Dispositif optoélectronique selon une des revendications 1 à 6, **caractérisé en ce que** pendant son mode de travail, le niveau du signal de réception est ajusté à une valeur de crête déterminée pendant le processus d'apprentissage.

8. Dispositif optoélectronique selon une des revendications 1 à 7, **caractérisé en ce que** celui-ci est réalisé sous la forme d'une barrière photoélectrique à une voie, les objets (15) étant guidés entre l'émetteur (2) et le récepteur (5) de la barrière photoélectrique à une voie.

9. Dispositif optoélectronique selon la revendication 8, **caractérisé en ce que** celui-ci est réalisé sous la forme d'une barrière photoélectrique à fourche.

10. Dispositif optoélectronique selon une des revendications 1 à 9, **caractérisé en ce que** celui-ci est réalisé sous la forme d'une barrière photoélectrique à réflexion, les objets (15) étant guidés à travers la zone de surveillance couverte par la barrière photoélectrique à réflexion, sur un bord de laquelle sont disposés l'émetteur (2) et le récepteur (5) et sur l'autre bord de laquelle est disposé un réflecteur (13).

11. Dispositif optoélectronique selon la revendication 10, **caractérisé en ce que** les axes de faisceau des rayons lumineux d'émission (3) et des rayons lumineux de réception (4) sont inclinés par rapport aux normales à la surface des objets (15).

12. Dispositif optoélectronique selon une des revendications 1 à 9, **caractérisé en ce que** celui-ci est réalisé sous la forme d'un détecteur de lumière, les rayons lumineux d'émission (3) émis par l'émetteur (2) étant au moins partiellement réfléchis sur un objet (15) et guidés en tant que rayons lumineux de réception (4) vers le récepteur (5).

13. Dispositif optoélectronique selon une des revendications 1 à 12, **caractérisé en ce que** celui-ci permet de détecter des étiquettes (6) en tant qu'objets (15), lesquelles sont placées sur une bande de support (7) formant le moyen de support.

14. Dispositif optoélectronique selon une des revendications 1 à 13, **caractérisé en ce que** celui-ci permet de détecter des objets (15) qui sont transportés sur une bande transporteuse (14) formant le moyen de support.
